# EUROPÄISCHE PATENTSCHRIFT

(11) **EP 4 003 033 B1**
(45) Veröffentlichungstag und Bekanntmachung des Hinweises auf die Patenterteilung: **01.04.2026**
(21) Anmeldenummer: 20746560.0
(22) Anmeldetag: 10.07.2020
(51) Int. Cl.: A01J 9/04, F25B 29/00

(54) **VERFAHREN UND ANLAGE ZUR DIREKTERHITZUNG EINES PROTEINANGEREICHERTEN MILCHPRODUKTS MITTELS DER EINBRINGUNG VON WASSERDAMPF IN DIESES MILCHPRODUKT**
METHOD AND APPARATUS FOR DIRECTLY HEATING A PROTEIN-ENRICHED MILK PRODUCT BY INTRODUCING STEAM INTO SAID MILK PRODUCT
PROCÉDÉ ET DISPOSITIF DE CHAUFFAGE DIRECT D'UN PRODUIT LAITIER ENRICHI EN PROTÉINES AU MOYEN DE L'INTRODUCTION DE LA VAPEUR D'EAU DANS CE PRODUIT LAITIER

(30) Priorität: 24.07.2019 DE 102019005133
(43) Veröffentlichungstag der Anmeldung: 01.06.2022
(73) Patentinhaber: GEA TDS GmbH, 31157 Sarstedt (DE)
(72) Erfinder: GLINKE, Dennis, 30169 Hannover DE (DE); ROLLE, Ulrich, 48351 Everswinkel (DE); GEHLING, Jürgen, 48703 Stadtlohn (DE); TACKE, Ludger, 46342 Velen (DE); ASSING, Hubert, 46683 Ahaus (DE)
(74) Vertreter: Hauck Patent- und Rechtsanwälte PartmbB
(86) Internationale Anmeldenummer: PCT/EP2020/000130
(87) Internationale Veröffentlichungsnummer: WO 2021/013377

(56) Entgegenhaltungen:
- EP-A1- 0 617 897
- EP-B1- 0 617 897
- WO-A1-2018/115131
- BULEVAR CARA LAZARA ET AL: "ANALYSIS OF ENERGY CONSUMPTION DURING MILK PROCESSING IN UHT-PLANT WITH TWO RECUPERATORS", 1 January 2005 (2005-01-01), pages 621 - 1, XP55739993, Retrieved from the Internet <URL:http://www.doiserbia.nb.rs/img/doi/1450-7188/2005/1450-71880536023D.pdf>
- HILTON DEETH: "Optimum Thermal Processing for Extended Shelf-Life (ESL) Milk", FOODS, vol. 6, no. 11, 1 November 2017 (2017-11-01), CH, pages 102, XP55740647, ISSN: 2304-8158, DOI: 10.3390/foods6110102
- LEE A P ET AL: "The influence of ultra-pasteurization by indirect heating versus direct steam injection on skim and 2% fat milks", JOURNAL OF DAIRY SCIENCE, vol. 100, no. 3, 31 October 2016 (2016-10-31), pages 1688 - 1701, XP029924531, ISSN: 0022-0302, DOI: 10.3168/JDS.2016-11899
- KELLEHER CLODAGH M ET AL: "A comparison of pilot-scale supersonic direct steam injection to conventional steam infusion and tubular heating systems for the heat treatment of protein-enriched skim milk-based beverages", INNOVATIVE FOOD SCIENCE AND EMERGING TECHNOLOGIES, vol. 52, 4 January 2019 (2019-01-04), pages 282 - 290, XP085635890, ISSN: 1466-8564, DOI: 10.1016/J.IFSET.2019.01.002
- BULEVAR CARA LAZARA ET AL: "ANALYSIS OF ENERGY CONSUMPTION DURING MILK PROCESSING IN UHT-PLANT WITH TWO RECUPERATORS", 1 January 2005 (2005-01-01), pages 621 - 1, XP055739993, Retrieved from the Internet <URL:http://www.doiserbia.nb.rs/img/doi/1450-7188/2005/1450-71880536023D.pdf>
- HILTON DEETH: "Optimum Thermal Processing for Extended Shelf-Life (ESL) Milk", FOODS, vol. 6, no. 11, 1 November 2017 (2017-11-01), CH, pages 102, XP055740647, ISSN: 2304-8158, DOI: 10.3390/foods6110102

## Beschreibung

### TECHNISCHES GEBIET

Die Erfindung betrifft ein Verfahren zur Direkterhitzung eines proteinangereicherten Milchprodukts mittels der Einbringung von Wasserdampf in dieses Milchprodukt, bei dem bei der Direkterhitzung der Wasserdampf das Milchprodukt zur Bildung eines keimfreien Zustands durch eine direkte Hocherhitzung auf eine Hocherhitzungs-Temperatur erhitzt. Vor der Direkterhitzung wird eine indirekte Vorerhitzung des Milchprodukts auf eine Vorerhitzungs-Temperatur und eine, in Strömungsrichtung des Milchprodukts gesehen, der Vorerhitzung nachfolgende erste Heißhaltung des vorerhitzten Milchprodukts mit einer definierten und kontrollierten ersten Verweilzeit durchgeführt. Weiterhin wird, in Strömungsrichtung des Milchprodukts gesehen, nach der Direkterhitzung auf die Hocherhitzungs-Temperatur eine zweite Heißhaltung mit einer definierten und kontrollierten zweiten Verweilzeit durchgeführt. Anschließend wird dem heißgehaltenen, hocherhitzten Milchprodukt durch Flash-Kühlen mittels Entspannung auf einen niedrigeren Druck Wasser in einer Menge, die jener des zuvor zugeführten Wasserdampfes entspricht, entzogen. Ferner betrifft die Erfindung eine Anlage zur Durchführung des Verfahrens, die unter anderem neben einer Direkterhitzungseinrichtung einen dieser vorgeordneten Vorerhitzer mit einem sich dem Vorerhitzer in Strömungsrichtung des Milchprodukts nachfolgenden ersten Heißhalter aufweist. Stromabwärts der Direkterhitzungseinrichtung ist ein zweiter Heißhalter vorgesehen, der zu einer Vakuumkammer führt.

In den letzten Jahren kann ein Trend der Konsumenten zum Verzehr proteinangereicherter Milchprodukte festgestellt werden, die besondere Anforderungen an die notwendige thermische Behandlung zur Verlängerung ihrer Lagerbeständigkeit und Haltbarkeit notwendig machen. Unter einem proteinangereicherten Milchprodukt wird beispielsweise eine Rohmilch als Ausgangsprodukt für die erfindungsgemäße Wärmebehandlung gemäß der vorliegenden Erfindung verstanden, die, wie die nachfolgend zitierten Messwerte von drei Versuchen zeigen, einen Gehalt von (säurelöslichem) β-Laktoglobulin in einem Bereich von 6,85 bis 8,35 g/kg Milch aufweist.

Aus **[1]** A. Schmid und H. Mayer, Diplomarbeit, Bestimmung von Furosin und anderen Erhitzungsindikatoren in Milch mittels HPLC, Universität Wien, Mai 2009, entnimmt man demgegenüber, dass der Mittelwert des Gehalts von nativem β-Laktoglobulin aus sieben untersuchten Rohmilchproben, die direkt von landwirtschaftlichen Betrieben oder aus Bioläden mit der Kennzeichnung "Rohmilch" stammen, bei 4,02 g/dm³ Milch (≈ 3,9 g/kg Milch) liegt.

Proteinangereicherte Milchprodukte sind hitzeempfindlich, sie neigen vorzugsweise bei Temperaturen über 100 °C zum Anbrennen, d.h. unter diesen Bedingungen zur Belagbildung an den Wandungen der Prozesseinrichtungen, die der Wärmebehandlung, Förderung und Strömungsführung des Milchprodukts dienen. Diese Belagbildung wird auch als Produkt-"Fouling" bezeichnet. Das Produkt-"Fouling" verringert die Standzeit bzw. die Betriebszeit der betroffenen Prozesseinrichtungen zwischen zwei Reinigungszyklen. Im Folgenden soll, wenn lediglich von Milchprodukten im Rahmen der vorliegenden Erfindung die Rede ist, immer auch das Merkmal "proteinangereichert" mitgelesen werden.

### STAND DER TECHNIK

Die Direkterhitzung von Milchprodukten mittels Wasserdampfs ist ein bekanntes und häufig angewendetes Verfahren. Sie dient der Verlängerung der Lagerbeständigkeit dieser Milchprodukte bzw. der daraus abgeleiteten Endprodukte. Die Wärmebehandlung mittels des Heizmediums Wasserdampf (vorzugsweise Sattdampf, aber auch in überhitztem Zustand) kann mit den unterschiedlichsten Verfahren, entweder direkt oder indirekt, erfolgen ([2], Heinz-Gerhard **KESSLER,** LebensmittelVerfahrenstechnik, Schwerpunkt Molkereitechnologie, 1. Auflage, München - Weihenstephan, Verlag A. Kessler, 1976, S. 154 bis 159). Zu den indirekten Verfahren zählt beispielsweise das Erwärmen unter Verwendung verschiedener Ausführungen von Wärmeaustauschern (Rekuperatoren: beispielsweise Rohrbündel-Wärmeaustauscher; Platten-Wärmeaustauscher). Die direkten Verfahren umfassen zwei Hauptgruppen, nämlich das Injektionsverfahren mittels Dampfs ([2], S. 154,155) und das Infusionsverfahren mittels Dampfs ([2], S. 156).

Durch den unmittelbaren Wärmeaustausch zwischen dem Wasserdampf und dem Milchprodukt wird dieses unmittelbar, schnell und effizient erwärmt. Infolge dieses schnellen Verfahrens kann die Behandlungszeit verringert werden, was insgesamt zu einer verringerten Wärmeeinwirkung auf das Milchprodukt führt und wodurch ein Milchprodukt erhalten wird, das vor allem im Hinblick auf den Geschmack ein höheres Qualitätsniveau behält. Die schnelle und schonende Wärmebehandlung beim direkten Erwärmungsverfahren wird um den Preis eines höheren Energieaufwandes gegenüber dem indirekten Erwärmungsverfahren erkauft.

Beim Injektionsverfahren wird das zu erwärmende Lebensmittelprodukt durch einen Injektor gefördert. Der Dampf wird mit einem höheren Druck zum Zwecke der Erhitzung direkt in das Lebensmittelprodukt injiziert, das vorzugsweise hierbei als Treibstrahl fungiert, und der Wärmeaustausch zwischen den sich mischenden Stoffströmen vollendet sich in einem sog. Mischraum **(**DE 10 2007 017 704 A1**).**

Beim Infusionsverfahren, bei dem die Infusionserwärmung zur Anwendung kommt, wird das feinverteilte Milchprodukt in einer Dampfkammer erwärmt. Der Dampf- und der Produktsystemdruck sind bei diesem Verfahren nahezu identisch. Damit ist die Temperaturdifferenz zwischen dem Erhitzungsmedium und dem Milchprodukt deutlich geringer als beim Injektionsverfahren, mit der Folge einer schonenderen Produktbehandlung. Die Nachteile des Infusions- im Vergleich zum Injektionsverfahren bestehen in einer komplizierteren Verfahrenstechnik und in höheren Investitionskosten. Einen Überblick über Verfahrenskonzepte zur Sterilisierung von Lebensmittelprodukten, insbesondere auch unter Berücksichtigung direkter Erhitzungsverfahren der vorbeschriebenen Art, geben [3] Saskia **SCHWERMANN,** Uwe **SCHWEN-ZOW** in "Verfahrenskonzepte zur Herstellung von ESL-Milch", Beitrag in drei Abschnitten in Deutsche Milchwirtschaft, 11/2008 bis 13/2008 (59. Jg.).

Die EP 0 958 745 A2 offenbart ein UHT-Verfahren für Milch-basierte Produkte, bei denen die Milch auf 65-85 °C vorerhitzt wird, mittels Dampfinjektion wird die Temperatur auf 85-105 °C erhöht, danach bei dieser Temperatur heißgehalten und stabilisiert und in einem Infusor findet anschließend die Hocherhitzung auf eine Temperatur von 140-145 °C statt. Nach einer Haltezeit in einem Bereich von 3-90 Sekunden wird das Produkt in eine Vakuumkammer geleitet, dort entspannt, dabei abgekühlt und es wird dem Produkt dadurch eine Wassermenge, die einer im vorgelagerten Sterilisationsprozess zugeführten Dampfmenge entspricht, entzogen. Im weiteren Verlauf des Prozesses wird das Produkt homogenisiert und weiter abgekühlt.

Die WO 2018/115 131 A1 beschreibt eine Anlage sowie ein Verfahren zur Erhitzung von flüssigen Milchkonzentraten, wobei das Produkt auf eine Temperatur von 5-75 °C vorerhitzt, anschließend in einem Infusor einer direkten Wärmebehandlung mit Dampf unterzogen und von dort auf dem Weg zu einer Vakuumkammer heißgehalten wird. In der Vakuumkammer wird dem Produkt in an sich bekannter Weise durch Entspannung und Abkühlung Wasser entzogen und anschließend weiter abgekühlt.

Ein Verfahren und eine Anlage der gattungsgemäßen Art beschreibt die EP 0 617 897 A1**,** die als nächstliegender Stand der Technik angesehen wird. Das Dokument offenbart ein Verfahren und eine Anlage zur Direkterhitzung eines milchbasierten Produkts. Hierbei wird das Produkt vor der Direkterhitzung mit Dampf erst vorerwärmt. Nach der Direkterhitzung erfährt das Produkt zunächst einer indirekten Kühlung, bevor es dann schließlich durch ein Flash-Kühlen auf Endtemperatur abgekühlt wird.

Zum einschlägigen Stand der Technik sind weiter zu nennen: **[4] KELLEHER,** C.M. et al., A comparison of pilot-scale supersonic direct steam injection to conventional steam infusion and tubular heating systems for the heat treatment of protein-enriched skim milk-based beverages; Innovative Food Science and emerging Technologies, Vol. 52, 2019, S 282-290, - ISSN 1466-8564 und **[5]** LEE, A.P. et al., The influence of ultra-pasteurization by indirect heating versus direct steam injection on skim and 2% fat milks; Journal of Dairy Science, Vol. 100, 2017, S. 1688-1701, - ISSN 0022-0302.

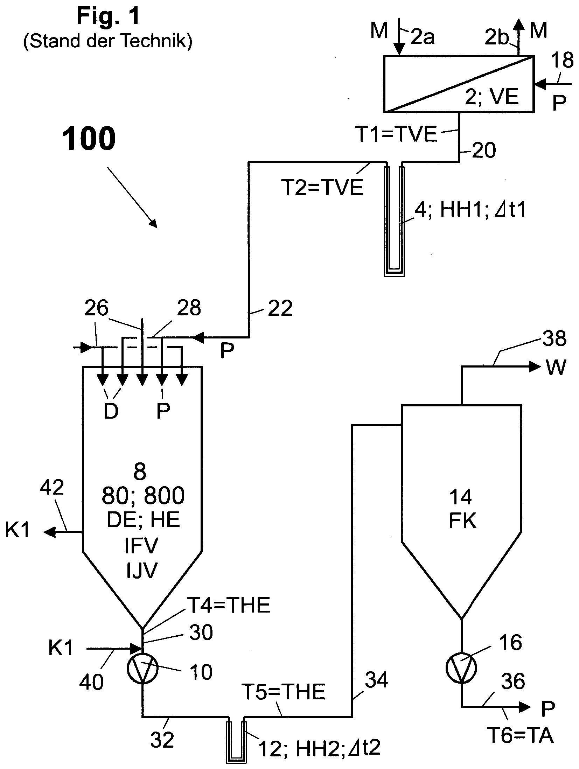

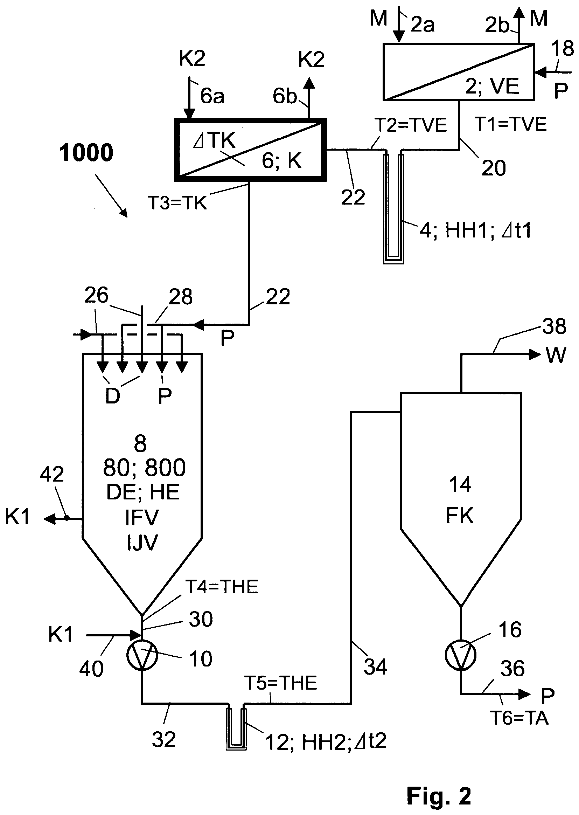

Dokument **[4]** offenbart in Figur 1 Fließdiagramme für die Behandlung von proteinangereicherten Milchgetränken mittels Dampfinfusion und Dampfinjektion (siehe S. 283, re. Sp., letzter Abs.; S 284, Fig. 1; S. 285, Tab. 1; S 285, li. Sp. bis S. 286, li. Sp., erster Abs.; S. 286, Fig. 2.

Dem Dokument **[5]** kann ebenfalls ein Erhitzungsverfahren für Milch mittels direkter Erhitzung mit Dampf entnommen werden; hier wird auf Figur 1, rechte Seite, verwiesen. Einer Vorerhitzung der Milch folgt eine Direkterhitzung mit Dampf und anschließend eine Vakuumkühlung.

Die Denaturierung einiger in der Milch befindlichen Molkenproteine beginnt bereits ab einer Temperatur von 65 °C, wobei die Hauptquelle der freiwerdenden SH-Gruppen das β-Laktoglobulin ist, das bei 130 °C vollständig denaturiert und in der Bildung des Kochgeschmacks ein Maximum erfährt. Für den Erhitzungsprozess hat dies einen erheblichen Einfluss auf die Betriebs- bzw. Produktionszeit, da ab einem Temperaurbereich oberhalb von 75 °C (≥ 75 °C) vermehrt Molkenproteine denaturieren und sich an den Wandungen der Erhitzer ablagern. Dieses eingangs erwähnte Produkt-"Fouling" führt bei längerer Betriebszeit zum Aufwachsen einer immer dicker werdenden "Fouling"-Schicht, wodurch sich der Wärmeübergang im Erhitzer kontinuierlich verschlechtert.

Um diesem Effekt vorzubeugen wird eine Heißhaltung des Milchprodukts bei 80 °C bis 90 °C durchgeführt. Eine typische Temperatur-Zeit-Kombination ist hier 90 °C für 120 Sekunden. Diese oder eine ähnliche Maßnahme ist in **[3]** nicht offenbart; sie ist jedoch als Stand der Technik anzusehen **(**EP 0 958 745 A2**).** In diesem Temperaturbereich wird eine gezielte Denaturierung der Molkenproteine erzwungen, die sich dann an einen bestimmten Teil der Kaseine binden (κ-Kasein). Kaseine bilden ca. 80 % des Gesamtproteingehalts in der Milch und sind im Vergleich zu den Molkenproteinen hitzestabil.

Im Falle proteinangereicherter Milch oder Milchprodukte, die Gegenstand der vorliegenden Erfindung sind, erhöht sich der Proteingehalt und somit auch der Gehalt an hitzeinstabilen Molkenproteinen.

Ein Vergleich zwischen indirekter und direkter Milcherhitzung zeigt mit Blick auf den denaturierten Anteil des β-Laktoglobulins, dass dieser bei der indirekten Milcherhitzung mit 83 % deutlich höher ist als bei der direkten mit 66 % (s. hierzu [2], Seiten 132, 133).

Der Grad der Denaturierung der Milchprodukte korreliert mit dem Grad und der Intensität der Hitzebehandlung, d.h. mit der jeweils angewandten Wärmebehandlung, wobei der Grad der Denaturierung heute durch sog. Erhitzungsindikatoren quantitativ erfasst wird. Bei diesen Erhitzungsindikatoren handelt es sich insbesondere um das säurelösliche β-Laktoglobulin (nicht-denaturiertes β-Laktoglobulin) und das Furosin. Sie dienen als Indikator zur Abschätzung und Kontrolle der tatsächlichen Hitzebelastung von Milchprodukten mit verlängerter Haltbarkeit. Es ist eine gesicherte Erkenntnis, dass der Grad der Denaturierung die ernährungsphysiologische und sensorische Qualität der Milchprodukte entscheidend bestimmt. Es besteht ein gesicherter Zusammenhang zwischen dem Gehalt an Furosin und dem Gehalt an nicht-denaturiertem β-Laktoglobulin, der in demselben und gleichbehandelten Milchprodukt ermittelt wird. Ein Anstieg des Furosin-Gehaltes steht mit einer Verringerung des β-Laktoglobulin-Gehaltes in Verbindung. Je größer die Hitzebelastung (Temperatur und Einwirkungszeit) ist, umso höher wird der Furosin-Gehalt bei gleichzeitig abnehmendem β-Laktoglobulin-Gehalt [1].

Es ist Aufgabe der vorliegenden Erfindung, ein Verfahren der gattungsgemäßen Art und eine Anlage zur Durchführung des Verfahrens zu schaffen, die eine signifikante Standzeitverlängerung im Verfahrensprozess bzw. in der Anlage bewirken und dabei einen gegenüber dem Stand der Technik höheren Gehalt an nicht-denaturierten Molkeproteinen im behandelten proteinangereicherten Milchprodukt sicherstellen.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des erfindungsgemäßen Verfahrens sind Gegenstand der zugeordneten Unteransprüche. Eine Anlage zur Durchführung des Verfahrens ist Gegenstand des nebengeordneten Anspruchs 6. Vorteilhafte Ausführungsformen der erfindungsgemäßen Anlage sind in den zugeordneten Unteransprüchen beschrieben.

Die Erfindung geht verfahrenstechnisch aus von der EP 0 617 897 A1 oder von einem bekannten Verfahren zur Direkterhitzung eines flüssigen Nahrungsmittelprodukts mittels Wasserdampf, wie es beispielsweise in der EP 0 794 706 B1 (Infusionsverfahren) oder in der WO 2011/101077 A1**,** die die Priorität der DE 10 2010 008 448 A1 in Anspruch nimmt (Infusionsverfahren; Injektionsverfahren), offenbart ist. Nach beiden Dokumenten wird das flüssige Nahrungsmittelprodukte, wie Molkenproteinkonzentrate, Babynahrung, flüssige Babynahrungskonzentrate, nahrhafte Getränke oder Käsereimilch, durch Wasserdampf zur Bildung eines keimfreien Zustands direkt erhitzt, wobei dem flüssigen Nahrungsmittelprodukt durch Entspannung auf einen niedrigeren Druck Wasser in einer Menge, die jener des zuvor zugeführten Wasserdampfes entspricht, entzogen wird. Andererseits sind beim Gegenstand der vorliegenden Erfindung, im Unterschied zum vorgenannten druckschriftlich benannten Stand der Technik, der Direkterhitzung eine an sich bekannte Vorerhitzung und insbesondere eine sich dieser in Strömungsrichtung des Milchprodukts anschließende zusätzliche, vorzugsweise definierte und kontrollierte erste Heißhaltung vorgeordnet.

Die der Erfindung zugrundeliegende Aufgabe wird gelöst, wenn bei dem Verfahren der gattungsgemäßen Art
- das vorerhitzte und heißgehaltene Milchprodukt vor der Direkterhitzung eine indirekte Kühlung durch einen rekuperativen Kühlschritt von der Vorerhitzungs-Temperatur auf eine Abkühl-Temperatur mit einer Temperatur-Differenz in einem Bereich von 5 K(elvin) bis 10 K (ΔTK ≤ (5 bis10) K) erfährt,
- die Direkterhitzung von der Abkühl-Temperatur auf die Hocherhitzungs-Temperatur mit an sich bekannten Direkterhitzungs-Einstellgrößen gesteuert wird, und
- nach Maßgabe des Merkmals (d) das Milchprodukt (P) durch das Flash-Kühlen von der Hocherhitzungs-Temperatur auf eine zwangsläufig notwendige Austritts-Temperatur abgekühlt wird.

Der erfinderische Grundgedanke besteht demnach darin, um die ernährungsphysiologische und sensorische Qualität des behandelten Milchprodukts in Form von nicht-denaturiertem Molkenprotein höchstmöglich zu erhalten, einen rekuperativen Kühlschritt nach der ersten Heißhaltung und vor der Hocherhitzung mittels einer indirekten Kühlung vorzusehen. Dieser Kühlschritt von der Vorerhitzungs-Temperatur auf eine Abkühl-Temperatur, der eine Temperatur-Differenz in einem Bereich von 5 bis 10 K(elvin) umfasst, zeitigt ein nicht vorhersehbares und überraschendes positives Ergebnis, weil er zum einen die Verweilzeit des Milchprodukts bei der Hocherhitzungs-Temperatur und zum anderen dadurch eine weitere Denaturierung der Molkenproteine vermindert.

Die sich anschließende Direkterhitzung beginnt auf dem Niveau der Abkühl-Temperatur und erhitzt das Milchprodukt bis auf die Hocherhitzungs-Temperatur unter Anwendung von an sich bekannten veränderbaren Direkterhitzungs-Einstellgrößen. Nach einer Ausgestaltung des Verfahrens handelt es sich hierbei um Druck, Temperatur und die Einwirkungsdauer des Wasserdampfes.

Beim Flash-Kühlen muss das derart behandelte Milchprodukt in Abhängigkeit von der durch die indirekte Kühlung zusätzlich erforderlichen Zufuhr von Wasserdampf auf eine zwangsläufig notwendige Austritts-Temperatur abgesenkt werden. Diese Austritts-Temperatur stellt sicher, dass das behandelte Milchprodukt hinsichtlich seines Wassergehaltes wieder seinen Zustand vor der Hocherhitzung, d.h. vor der die Hocherhitzung bewirkende Zufuhr von Wasserdampf, erreicht.

Bei einer Hocherhitzungs-Temperatur, die bis in den Bereich von 140 °C reichen kann, umfasst die erfindungsgemäße Abkühlung des vorerhitzten und heißgehaltenen Milchprodukts von der Vorerhitzungs-Temperatur auf die Abkühl-Temperatur eine Temperatur-Differenz in einem Bereich von 5 K(elvin) bis 10 K. Die Dauer der ersten Verweilzeit des Milchprodukts in der der Hocherhitzung vorgeschalteten ersten Heißhaltung kann das Maß der konkreten Temperatur-Differenz auch beeinflussen kann.

Der mit der Realisierung des Gegenstandes der vorliegenden Erfindung beauftragte Fachmann wird, ohne dass er erfinderisch tätig werden muss, unter den konkreten Prozessbedingungen und Produktanforderungen jeweils eine Optimierung aller vorgenannten Einflussgrößen mit Blick auf die Standzeit einerseits und eine hohe ernährungsphysiologische und sensorische Qualität des wärmebehandelten, proteinangereicherten Milchprodukts andererseits vornehmen können.

Im nachfolgend konkret beschriebenen Ausführungsbeispiel des erfindungsgemäßen Verfahrens, bei dem die vorliegenden Produktanforderungen ohne den erfindungsgemäßen Kühlschritt eine Hocherhitzung von 85 °C auf 137,5 °C vorsehen, wurde eine Optimierung im vorstehenden Sinne durch Kühlung bzw. mit einem Kühlschritt mit einer Temperatur-Differenz von 10 K erreicht, wobei die erste Verweilzeit der ersten Heißhaltung 30 Sekunden beträgt und die Hocherhitzung somit von 75 °C auf 137,5 °C durchgeführt wird.

Eine konkrete, zielführende Abkühl-Temperatur ist abhängig von den speziellen Prozessdaten der Direkterhitzung. Sie ist so bemessen, dass mit den zur Verfügung stehenden und in einem begrenzten Bereich veränderbaren Direkterhitzungs-Einstellgrößen, wie Druck, Temperatur, Einwirkungsdauer des Wasserdampfes, die Hocherhitzung von der realisierten Abkühl-Temperatur auf die auch durch den erfindungsgemäßen Kühlschritt nach wie vor unverändert erforderliche Hocherhitzungs-Temperatur energetisch sichergestellt ist.

Der erfindungsgemäße Verfahrensschritt findet in vorteilhafter Weise, wie dies vorgeschlagen wird, gleichermaßen auf die Direkterhitzung durch ein an sich bekanntes Infusionsverfahren oder ein an sich bekanntes Injektionsverfahren Anwendung.

Durch den erfindungsgemäßen Kühlschritt ergeben sich zusammengefasst folgende Vorteile:
- verringerte Denaturierung der Molkenproteine (verringerter Kochgeruch, der durch die freiwerdenden SH-Gruppen entsteht);
- verringerte Maillard-Reaktion (Bräunung);
- verringerte Bildung von Furosin;
- signifikante Verlängerung der Standzeit, wobei nach 5 Stunden Produktionszeit geringes bis kein Produkt-"Fouling" festzustellen ist und sich die maximale Standzeit auf das Zwei- bis Dreifache gegenüber der Standzeit der Verfahren oder Anlagen nach dem Stand der Technik verlängert.

Zur vorbeschriebenen Prozess- und Produktverbesserung wird Kühlenergie benötigt. Das rücklaufende warme Kühlmittel (vorzugsweise Kühlwasser) wird zur energetischen Verbesserung des gesamten Prozesses entweder im Mischprozess oder regenerativ zum Anwärmen benutzt.

Eine erfindungsgemäße Anlage zur Durchführung des erfindungsgemäßen Verfahrens geht aus von der EP 0 617 897 A1 oder von der Kombination folgender, an sich bekannter Merkmale, die überwiegend in der vorstehend bereits genannten EP 0 794 706 B1 (Infusionsanlage) oder in der WO 2011/101077 A1 (Infusionsanlage; Direkterhitzungseinrichtung mit Injektionsvorrichtung), offenbart sind, wobei diesem druckschriftlich benannten Stand der Technik ein ebenfalls an sich bekannter ersten Heißhalter zwischen einem Vorerhitzer und einer Direkterhitzungseinrichtung **(**EP 0 958 745 A2**)** nicht zu entnehmen ist:
- eine Direkterhitzungseinrichtung für das Milchprodukt zu einer direkten Hocherhitzung mittels Wasserdampfs auf eine Hocherhitzungs-Temperatur,
- einen, in Strömungsrichtung des Milchprodukts gesehen, stromaufwärts der Direkterhitzungseinrichtung angeordneten, als Rekuperator ausgebildeten Vorerhitzer zu einer indirekten Vorerhitzung des Milchprodukts auf eine Vorerhitzungs-Temperatur,
- einen ersten Heißhalter zu einer ersten Heißhaltung des vorerhitzten Milchprodukts, der zwischen der Direkterhitzungseinrichtung und dem Vorerhitzer angeordnet ist,
- eine stromabwärts der Direkterhitzungseinrichtung angeordnete erste Fördereinrichtung zur Förderung des hocherhitzen Milchprodukts,
- einen stromabwärts der ersten Fördereinrichtung angeordneten zweiten Heißhalter zu einer zweiten Heißhaltung des hocherhitzten Milchprodukts und
- eine stromabwärts des zweiten Heißhalters angeordnete Vakuumeinrichtung, in der dem heißgehaltenen, hocherhitzten Milchprodukt anschließend durch ein Flash-Kühlen mittels Entspannung auf einen niedrigeren Druck Wasser in einer Menge, die jener des zuvor zugeführten Wasserdampfes entspricht, entzogen wird.

Ausgehend von der gattungsgemäßen Anlage wird die der Erfindung zugrundeliegende Aufgabe anlagentechnisch dadurch gelöst,
dass zwischen der Direkterhitzungseinrichtung und dem ersten Heißhalter ein als Rekuperator ausgebildeter Kühler angeordnet ist, der das vorerhitzte Milchprodukt durch eine indirekte Kühlung von der Vorerhitzungs-Temperatur auf eine Abkühl-Temperatur abkühlt.

Die erfindungsgemäße Anordnung des Kühlers findet in vorteilhafter Weise, wie dies vorgeschlagen wird, gleichermaßen auf die Direkterhitzungseinrichtung in Gestalt einer an sich bekannten Infusionseinrichtung oder in Gestalt einer an sich bekannten Injektionseinrichtung Anwendung.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens der gattungsgemäßen Art und den verschiedensten Ausführungsformen einer Anlage der gattungsgemäßen Art zur Durchführung des Verfahrens realisiert ist, wird nachfolgend anhand der Zeichnung ein bevorzugtes Ausführungsbeispiel des erfindungsgemäßen Verfahrens und der erfindungsgemäßen Anlage beschrieben. Es zeigen
- **Figur 1**: in schematischer Darstellung eine Anlage zur Direkterhitzung eines proteinangereicherten Milchprodukts mittels der Einbringung von Wasserdampf in dieses Milchprodukt nach dem Stand der Technik;
- **Figur 2**: in schematischer Darstellung und ausgehend von der bekannten Anlage gemäß **Figur 1** die erfindungsgemäße Anlage mit einem erfindungsgemäß angeordneten Kühler;
- **Figur 3**: ein Blockschaltbild des Verfahrens gemäß dem Stand der Technik **(Versuch I);**
- **Figur 3a**: ein Blockschaltbild des erfindungsgemäßen Verfahrens mit einer Kühlung um **ΔTK** = 5 K **(Versuch II);**
- **Figur 3b**: ein Blockschaltbild des erfindungsgemäßen Verfahrens mit einer Kühlung um **ΔTK** = 10 K **(Versuch III);**
- **Figur 4**: einen Ausschnitt aus der Anlage gemäß **Figur 2** im Bereich stromaufwärts einer Direkterhitzungseinrichtung ohne Kühlung bzw. Kühleingriff des vorerhitzten und heißgehaltenen Milchprodukts zur Durchführung des Verfahrens nach dem Stand der Technik;
- **Figur 5**: den Ausschnitt aus der Anlage gemäß **Figur 2** mit der erfindungsgemäßen Kühlung des vorerhitzten und heißgehaltenen Milchprodukts mittels des erfindungsgemäß angeordneten Kühlers zur Durchführung des erfindungsgemäßen Verfahrens;
- **Figur 6**: eine grafische, normierte Darstellung der Messwerte für den Gehalt von nicht-denaturiertem β-Laktoglobulin aus einem in der erfindungsgemäßen Anlage gemäß den **Figuren 2****,** **4** und **5** behandelten proteinangereicherten Milchprodukt, ermittelt aus **Versuchen I** bis **III;**
- **Figur 7**: eine grafische, normierte Darstellung der Messwerte für den Gehalt von Furosin aus einem in der erfindungsgemäßen Anlage gemäß den **Figuren 2****,** **4** und **5** behandelten proteinangereicherten Milchprodukt, ermittelt aus **Versuchen I** bis **III** und
- **Figuren 8a, 8b, 9a, 9b, 10a, 10b**: fotografische Aufnahmen des Produkt-"Foulings" bzw. der '"Fouling"-Schicht im Eintritt der stromabwärts der Direkterhitzungseinrichtung angeordneten zweiten Fördereinrichtung nach 5 Stunden Produktionszeit, wobei jeweils zwei vertikal zueinander angeordnete Aufnahmen (8a, 8b; 9a, 9b; 10a, 10b) in der genannten Reihenfolge den **Versuchen I** bis **III** zugeordnet und dargestellt sind.

Eine aus dem Stand der Technik druckschriftlich bekannte Anlage 100 gemäß **Figur 1** (soweit es eine Infusionseinrichtung und die dieser stromabwärts angeordneten weiteren Einrichtungen betrifft) ist beispielsweise in der EP 794 706 B1 oder der WO 2011/101077 A1 offenbart. Die Anlage 100 enthält zur Durchführung eines Infusionsverfahrens IFV eine in Form einer Infusionseinrichtung 80 ausgebildete Direkterhitzungseinrichtung 8 zur Durchführung einer Hocherhitzung HE im Rahmen einer Direkterhitzung DE. Die Infusionseinrichtung 80 kann in ihrem Kopfraum einen Produkt-Einlass 28 aufweisen **(**WO 2010/086082 A1**),** über den ein proteinangereichertes Milchprodukt P, das hitzebehandelt werden soll, dieser Infusionseinrichtung 80 beispielsweise und vorzugsweise zentral und kreisringförmig zugeführt wird.

Dem zugeführten Milchprodukt P wird zur Direkterhitzung beispielsweise und vorzugsweise über einen äußeren und inneren Wasserdampf-Einlass 26 Wasserdampf D radial außenseits und gleichzeitig radial von innen zugeführt, wodurch eine Hocherhitzung HE von einer Vorerhitzungs-Temperatur T2 = TVE auf eine Hocherhitzungs-Temperatur T4 = THE erfolgt. Der Stand der Technik kennt hinsichtlich der Ausgestaltung der Zufuhr des Milchprodukts P und des Wasserdampf D zahlreiche weitere Möglichkeiten, die ebenfalls im Rahmen der vorliegenden Erfindung Anwendung finden können. Die Infusionseinrichtung 80 erfährt über einen ersten Kühlmittel-Eintritt 40 eine Zuführung eines ersten Kühlmittel K1 zu einem behälterbodenseitigen Kühlmittelraum zur Kühlung eines Bodens der Infusionseinrichtung 80. Die Abführung des ersten Kühlmittels K1 erfolgt über einen ersten Kühlmittel-Austritt 42.

Eine Auslassöffnung am unteren Ende der Infusionseinrichtung 80 ist über ein Auslassrohr 30 mit einer ersten Fördereinrichtung 10 beispielsweise eine rotierende Verdrängerpumpe oder eine Zentrifugalpumpe, verbunden, die über einen dritten Produktleitungs-Abschnitt 32 mit einem zweiten Heißhalter 12 zu einer zweiten Heißhaltung HH2 zwecks Beibehaltung der Hocherhitzungs-Temperatur T5 = THE über eine zweite Verweilzeit Δt2 verbunden ist. Der zweite Heißhalter 12 führt über einen vierten Produktleitungs-Abschnitt 34 zu einer Vakuumkammer 14. Die zweite Fördereinrichtung 10 fördert das hocherhitzte und auf der Hocherhitzungs-Temperatur THE heißgehaltene Milchprodukt P von der Infusionseinrichtung 80 zur Vakuumkammer 14. Die Vakuumkammer 14 ist dazu ausgebildet, um durch eine sog. Flash-Kühlung FK dem sich durch eine Druckabsenkung abkühlenden Milchprodukt P jene Menge Wasser W als sog. Brüden bzw. Brüdendampf zu entziehen, die in Form von Wasserdampf D der Infusionseinrichtung 80 zugeführt wird, und über einen vorzugsweise im oberen Bereich angeordneten Brüden-Austritt 38 abzuleiten. Ein derart behandeltes Milchprodukt P verlässt die Vakuumkammer 14 über eine in ihrem unteren Bereich an einem sich verjüngenden Boden angeordnete Abführleitung 36 auf dem Weg über eine zweite Fördereinrichtung 16 mit einer Austritts-Temperatur T6 = TA.

Das thermisch zu behandelnde Milchprodukt P tritt in die Anlage 100 über einen Milchprodukt-Eintritt 18 in einen Vorerhitzer 2 zu einer Vorerhitzung VE auf die Vorerhitzungs-Temperatur T1 = TVE ein. Der Vorerhitzer 2 führt über einen ersten Produktleitungs-Abschnitt 20 zu einem ersten Heißhalter 4 zur ersten Heißhaltung HH1 zwecks Beibehaltung der Vorerhitzungs-Temperatur T2 = TVE über eine erste Verweilzeit Δt1. Der erste Heißhalter 4 mündet über einen zweiten Produktleitungs-Abschnitt 22 und den sich anschließenden Produkteinlass 28 in den Kopfraum der Infusionseinrichtung 80. Der Vorerhitzer 2 wird auf dem Weg über einen Wärmeträger-Eintritt 2a und einen Wärmeträger-Austritt 2b mit einem vorzugsweise regenerativen Wärmeträgermedium M beschickt.

Die Direkterhitzungseinrichtung 8 der Anlage 100 **(****Figur 1****)** kann alternativ zur vorstehend beschriebenen Infusionseinrichtung 80 in Gestalt einer Injektionseinrichtung 800 zur Durchführung eines Injektionsverfahrens IJV ausgebildet sein. In dieser an sich bekannten Ausbildung tritt das Milchprodukt P zwecks Hocherhitzung HE über den Produkt-Einlass 28 in die Injektionseinrichtung 800 ein und bildet dort vorzugweise einen Treibstrahl aus. Der Treibstrahl durchströmt einen Mischraum der Injektionseinrichtung 800, wobei das Strömen des Heizmediums Wasserdampf D zwecks Einleitens in das Milchprodukt P durch Druckabfall hervorgerufen wird, der durch die Geschwindigkeit des als Treibstrahl ausgebildeten Milchprodukts P entsteht. Der Wasserdampf-Einlass 26 führt gleichfalls zum Mischraum, und der Wasserdampf D beaufschlagt dort den Treibstrahl vorzugweise lateral.

Eine erfindungsgemäße Anlage 1000 **(****Figur 2****)** zur Direkterhitzung DE des proteinangereicherten Milchprodukts P mittels der Einbringung von Wasserdampf D in dieses Milchprodukt P geht in identischer Weise aus der bekannten Anlage 100 gemäß **Figur 1** hervor, wobei die Bezugszeichen unverändert übernommen werden. Um Wiederholungen zu vermeiden werden im Folgenden nur die Unterschiede beschrieben, durch die sich die erfindungsgemäße Anlage 1000 von der bekannten Anlagen 100 unterscheiden.

Zwischen der Direkterhitzungseinrichtung 8, 80, 800 und dem ersten Heißhalter 4 ist ein als Rekuperator ausgebildeter Kühler 6 angeordnet, dessen Produktseite über den zweiten Produktleitungs-Abschnitt 22 geführt ist. Der Kühler 6 wird über einen zweiten Kühlmittel-Eintritt 6a und einen zweiten Kühlmittel-Austritt 6b mit einem zweiten Kühlmittel K2, vorzugweise Kaltwasser, beaufschlagt, und er hat die Aufgabe, das vorerhitzte und heißgehaltene Milchprodukt P durch eine indirekte Kühlung K um eine Temperatur-Differenz ΔTK von der Vorerhitzungs-Temperatur T2 = TVE auf eine Abkühl-Temperatur T3 = TK abzukühlen.

Mit der erfindungsgemäßen Anlage 1000 wurden Versuche durchgeführt, die zum Nachweis der Erreichung der mit der erfindungsgemäßen Aufgabenstellung formulierten Ziele dienen. Von diesen Versuchen werden nachstehend drei an aufeinanderfolgenden Tagen durchgeführte Versuche, nämlich die mit **Versuch I, II** und **III** gekennzeichneten, hinsichtlich einer Auswahl an relevanten Ergebnissen und Messwerten referiert.

### Versuche I, II und III - Übersicht

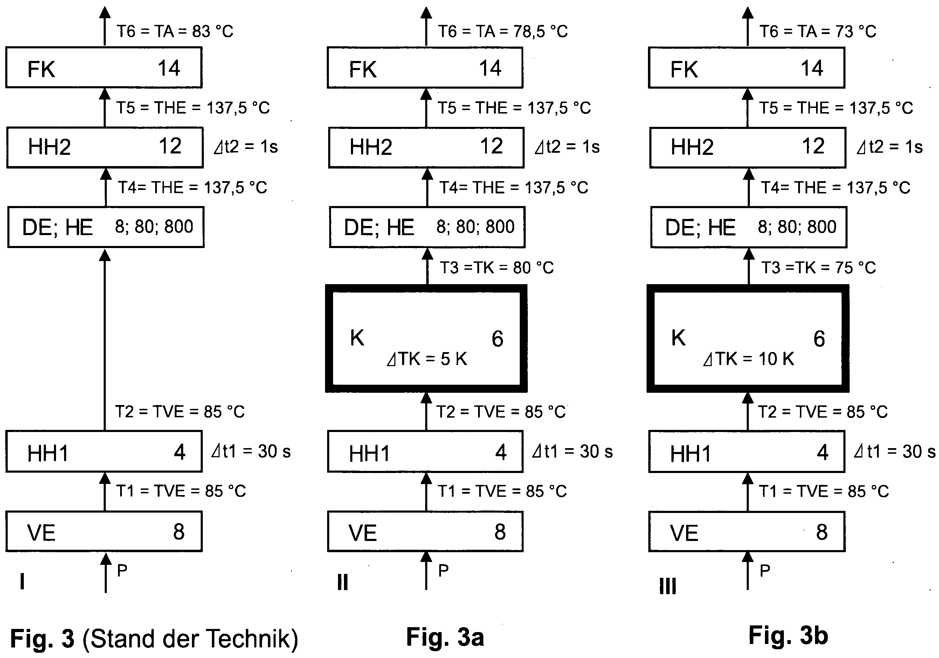

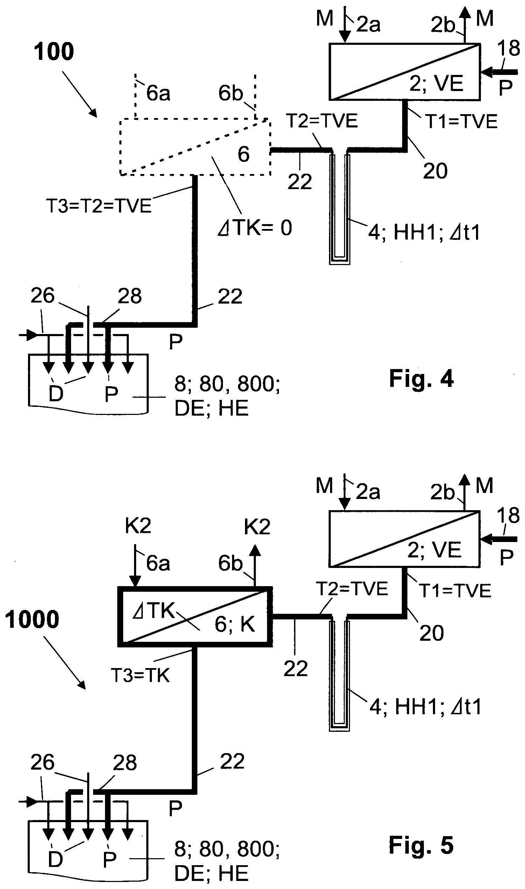

I erster Versuch (ohne Kühlung K), Prozessführung gemäß **Figuren 3****,** **4**
II zweiter Versuch (mit Kühlung K), Prozessführung gemäß **Figuren 3a****,** **5**
III dritter Versuch (mit Kühlung K), Prozessführung gemäß **Figuren 3b****,** **5**

Im **Versuch** I **(****Figuren 4** und **3****)** wird das auf die Vorerhitzungs-Temperatur T2 = TVE vorerhitzte und heißgehaltene Milchprodukt P ohne Kühlung K über den zweiten Produktleitungs-Abschnitt 22 durch den "inaktiven" Kühler 6 geführt und mit der Vorerhitzungs-Temperatur T2 = TVE der als Infusionseinrichtung 80 ausgebildeten Direkterhitzungseinrichtung 8 zugeführt.

In den **Versuchen II** und **III (****Figuren 5** und **3a** bzw. **Figuren 5** und **3b****)** wird das auf die Vorerhitzungs-Temperatur T2 = TVE vorerhitzte und heißgehaltene Milchprodukt P jeweils auf dem Weg über den zweiten Produktleitungs-Abschnitt 22 durch den "aktiven" Kühler 6 geführt, erfährt dort die indirekte Kühlung K um die Temperatur-Differenz **ΔTK** auf die Abkühl-Temperatur T3 = TK, wobei sich die Temperatur-Differenz **ΔTK** des **Versuchs II** von jener des **Versuchs III** unterscheidet. Das Milchprodukt P tritt mit der jeweiligen Abkühl-Temperatur T3 = TK in die als Infusionseinrichtung 80 ausgebildete Direkterhitzungseinrichtung 8 ein.

Alle relevanten Temperaturen und Verweilzeiten der **Versuche I bis III** der Wärmebehandlung des proteinangereicherten Milchprodukts P von der Vorerhitzung VE im Vorerhitzer 2 mit der Vorerhitzungs-Temperatur T1 = TVE bis zum behandelten Milchprodukt P in der Abführleitung 36 mit einer Austritts-Temperatur T6 = TA **(****Figuren 1****,** **2****)** sind in der nachfolgenden **Tabelle 1** zusammengestellt. Für die Wärmebehandlung gilt unter anderem: **Versuch I:** TVE - TA = 2 K; **Versuch** II: TK - TA = 1,5 K; **Versuch III:** TK - TA = 2 K.

**Tabelle 1**

| **Versuch** | **TVE** in °C | Δ**t1** in s | **TK** in °C | **THE** in °C | Δt2 in s | **TA** in °C |
|---|---|---|---|---|---|---|
| **I** | 85 | 30 | - | 137,5 | 1 | 83 |
| **II** | 85 | 30 | **80** | 137,5 | 1 | 78,5 |
| **III** | 85 | 30 | **75** | 137,5 | 1 | 73 |

### Versuchsergebnisse

Eine Auswahl der in den **Versuchen I** bis **III** ermittelten Messwerte ist in der vorstehenden **Tabelle 2** zusammengestellt. Die relevanten Erhitzungsindikatoren, nämlich nicht-denaturiertes β-Laktoglobulin und Furosin, zur Abschätzung und Kontrolle der tatsächlichen Hitzebelastung von Milchprodukten und ihre Bedeutung für die ernährungsphysiologische und sensorische Qualität dieser Milchprodukte wurde vorstehend thematisiert. Die diesbezüglichen Messwerte, gewonnen aus den **Versuchen I** bis **III,** sind in **Tabelle** 2 durch graue Markierung hervorgehoben.

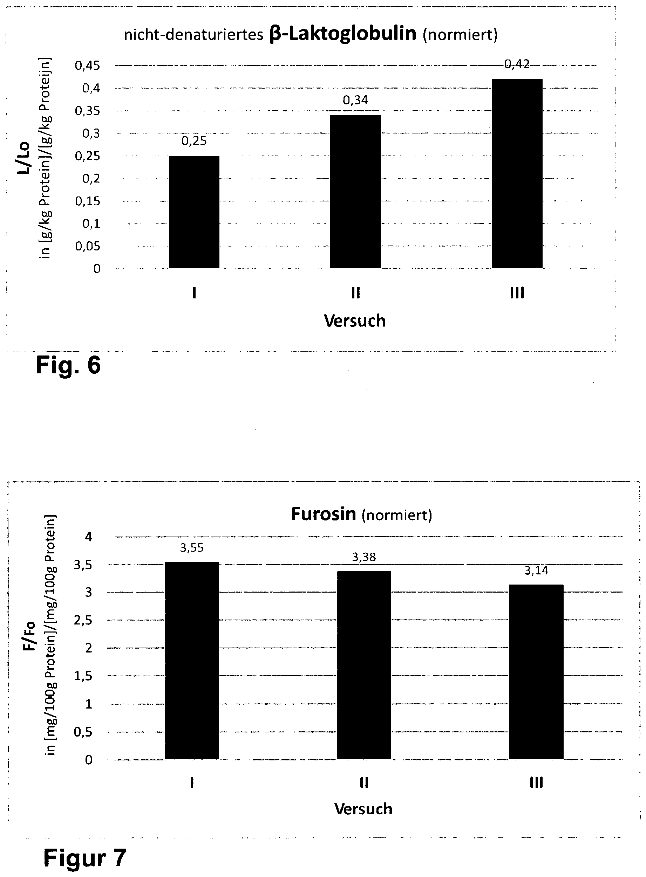

In **Figur** 6 ist der normierte Gehalt an nicht-denaturiertem β-Laktoglobulin L/Lo [1] im behandelten Milchprodukt P für die **Versuche** I bis III dargestellt. Dabei stellt L den jeweiligen Messwert (β-Lg) für das nicht-denaturierte β-Laktoglobulin in g/kg Protein (*) in dem behandelten Milchprodukt P dar, der auf Lo bezogen ist, wobei Lo als Bezugsgröße für die Normierung den jeweiligen Messwert für das nicht-denaturierte β-Laktoglobulin im unbehandelten Milchprodukt P (Rohmilch) bezeichnet.

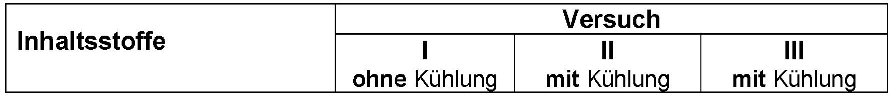

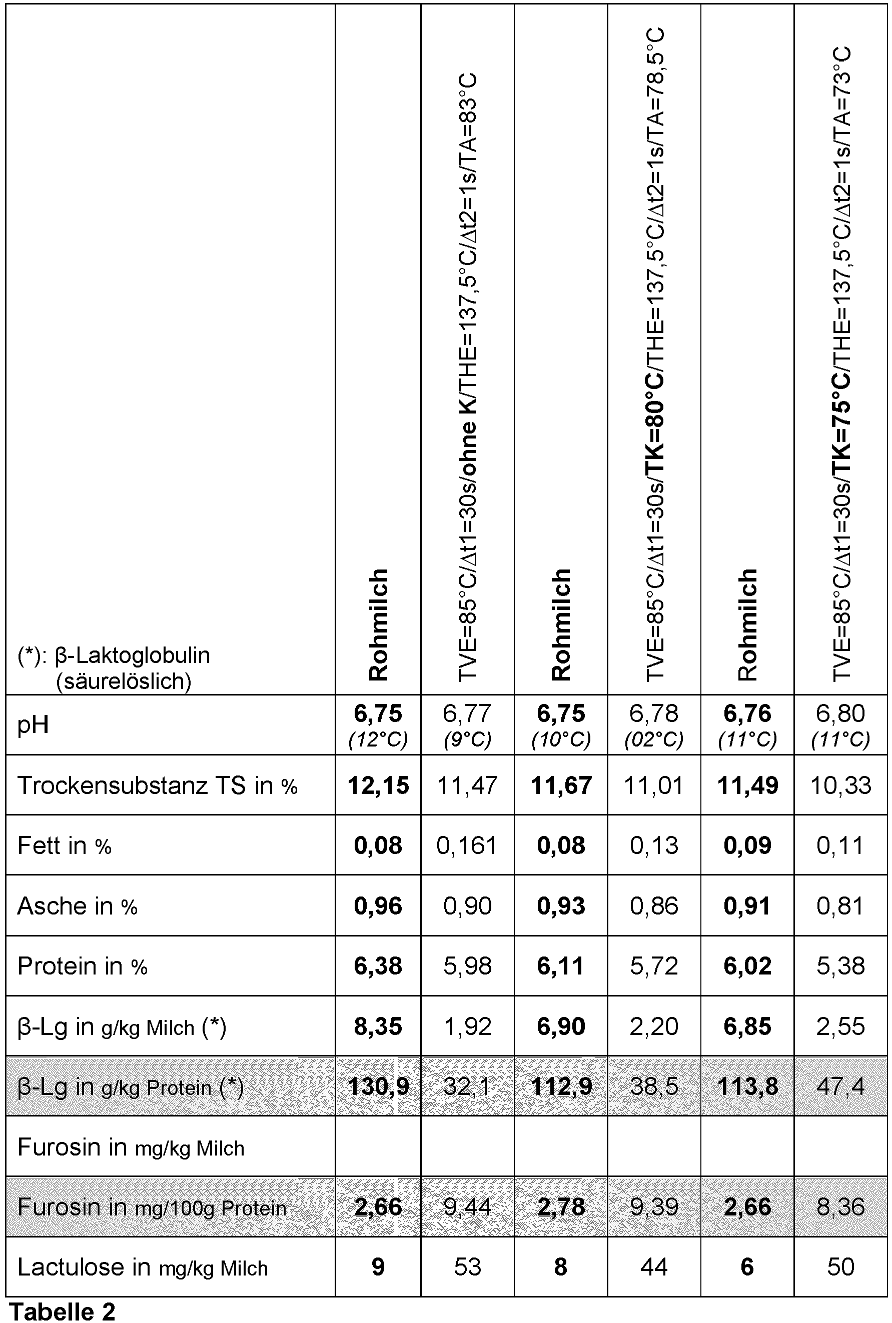

### Ergebnis

Die Versuchsergebnisse **(Tabelle 2)** zeigen, dass die erfindungsgemäße indirekte Kühlung K ausweislich des **Versuchs II** (ΔTK = 5 K → L/Lo = 0,34) und des **Versuchs III** (ΔTK = 10 K → L/Lo = 0,42) zu einer wünschenswerten, nicht erwarteten und überraschenden Erhöhung des Gehalts an nicht-denaturiertem β-Laktoglobulin gegenüber dem **Versuch** I (ohne Kühlung K; **ΔTK** = 0 K → L/Lo = 0,25) führt, wobei unter den gegebenen sonstigen Prozessbedingungen in der Anlage 1000 die Kühlung um **ΔTK** = 10 K im **Versuch III** ein optimales Ergebnis liefert **(****Figur 6****).**

In **Figur 7** ist der normierte Gehalt an Furosin F/Fo [1] im behandelten Milchprodukt P für die **Versuche** I bis **III** dargestellt. Dabei stellt F den jeweiligen Messwert für das Furosin in mg/100g Protein in dem behandelten Milchprodukt P dar, der auf Fo bezogen ist, wobei Fo als Bezugsgröße für die Normierung den jeweiligen Messwert für das Furosin im unbehandelten Milchprodukt P (Rohmilch) bezeichnet.

### Ergebnis

Die Versuchsergebnisse **(Tabelle 2)** zeigen, dass die erfindungsgemäße indirekte Kühlung K ausweislich des **Versuchs II** (ΔTK = 5 K → F/Fo = 3,38) und des **Versuchs III** (ΔTK = 10 K → F/Fo = 3,14) zu einer wünschenswerten, nicht erwarteten und überraschenden Erniedrigung des Gehalts an Furosin gegenüber dem **Versuch I** (ohne Kühlung K; **ΔTK** = 0 K → F/Fo = 3,55) führt, wobei unter den gegebenen sonstigen Prozessbedingungen in der Anlage 1000 die Kühlung um **ΔTK** = 10 K im **Versuch III** ein optimales Ergebnis liefert.

Ob allerdings die Erhöhung des Gehalts an β-Laktoglobulin und die Erniedrigung des Gehalts an Furosin ausschließlich auf die erfindungsgemäße indirekte Kühlung K vor der Direkterhitzung DE zurückzuführen sind, kann durch die **Versuche I** bis **III** nicht zwingend belegt werden. Es ist nicht auszuschließen, dass die festgestellten Unterschiede, die wünschenswert, nicht erwartet und überraschend sind, zu einem überwiegenden Teil auf die erfindungsgemäße indirekte Kühlung K und, wenn überhaupt, zu einem eher kleinen Teil auf die notwendige stärkere Kühlung des proteinangereicherten Milchprodukts P bei der Flash-Kühlung FK (unterschiedliche Austritts-Temperaturen 78,5 °C und 73 °C für die **Versuche II** bzw. **III**jeweils gegenüber TA = 83 °C für **Versuch** I) zurückzuführen sind.

Diese Nichterkenntnis scheint aber nicht erfindungswesentlich zu sein, zumal die **Versuche II** und **III** zwangsläufig untereinander und jeweils gegenüber **Versuch** I in den unterschiedlichen Austritts-Temperaturen TA enden müssen. Letztere resultieren zwingend aus der Bedingung, die das Merkmal (d) im Oberbegriff des Anspruchs 1 setzt, und letztlich ist die erfindungsgemäße indirekte Kühlung ursächlich auch für diesen Sachverhalt und seine möglichen Auswirkungen verantwortlich.

Die Erfüllung des Merkmals (d) gelingt nur in Abhängigkeit von der jeweils im Zuge der Direkterhitzung DE in den **Versuchen** I bis **III** zugeführten Menge Wasserdampf (vorzugsweise Sattdampf), und damit zwangsläufig mit entsprechend zugeordneten, voneinander verschiedenen Austritts-Temperaturen TA. Das Flash-Kühlen FK schließt auch den Entzug jener Menge Wasser mit ein, die durch die jeweilige indirekte Kühlung K von der Vorerhitzungs-Temperatur TVE auf die Abkühl-Temperatur TK (Enthalpie-Erniedrigung) wiederum in Form einer adäquaten Menge Wasserdampf D im Zuge der Direkterhitzung DE von der Abkühl-Temperatur TK auf die Hocherhitzungs-Temperatur THE (Enthalpie-Erhöhung) kompensatorisch zwangsläufig erforderlich ist.

Die den **Versuchen** I bis **III** zugeordneten Austritts-Temperaturen TA (siehe **Tabelle 1)** müssen zur Erfüllung der Bedingung, die das Merkmal (d) im Oberbegriff des Anspruchs 1 setzt, aus den nachfolgenden Gründen zwangsläufig unterschiedlich sein.

### Versuch I (ohne Kühlung)

Um bei der Flash-Kühlung FK dem hocherhitzten Milchprodukt P die Menge Wasser W, die jener Menge des zuvor zur Erhitzung von der Vorerhitzungs-Temperatur TVE = 85 °C auf die Hocherhitzungs-Temperatur THE = 137,5 °C zugeführten Wasserdampfes D entspricht, zu entziehen, ist in der Vakuumeinrichtung 14 (siehe **Figur 2****)** ein Sättigungs-Druck ps bzw. ein entsprechender Absolutdruck (Unterdruck gegenüber Atmosphärendruck) einzustellen, der das Milchprodukt P bei einer Sättigungs-Temperatur Ts(ps) = 83 °C, die auch der Austritts-Temperatur TA entspricht, sieden lässt.

### Versuch II (mit Kühlung; Abkühlung von TVE = 85 °C auf TK = 80 °C; ΔTK = 5 K)

Die Abkühlung des Milchprodukts P um eine Temperatur-Differenz ΔTK = 5 K erfordert eine entsprechende Wärmeabfuhr bzw. eine Enthalpie-Erniedrigung aus bzw. in dem Milchprodukt P. Diese Enthalpie-Erniedrigung im **Versuch II** muss im Zuge der Direkterhitzung DE durch zusätzliche Zufuhr von Wasserdampf, vorzugsweise Sattdampf, gegenüber **Versuch I** kompensiert werden, um auf die gleiche Hocherhitzungs-Temperatur THE wie in **Versuch I** (THE = 137,5 °C) zu gelangen.

Damit das Milchprodukt P durch die zusätzliche Dampfzufuhr im **Versuch II** nicht "verwässert" wird, muss dem Milchprodukt P in der Vakuumkammer 14 durch das sog. Flash-Kühlen FK eine der zusätzlichen Menge Wasserdampf entsprechende Menge Wasser in Form von Brüden entzogen werden. Dieser Vorgang vollzieht sich im Sättigungszustand des Milchprodukts P.

### Versuch III (mit Kühlung; Abkühlung von TVE = 85 °C auf TK = 75 °C; ΔTK=10 K)

Die Abkühlung des Milchprodukts P um eine Temperatur-Differenz ΔTK = 10 K erfordert eine entsprechende Wärmeabfuhr bzw. eine Enthalpie-Erniedrigung aus bzw. in dem Milchprodukt P. Diese Enthalpie-Erniedrigung im **Versuch III** muss im Zuge der Direkterhitzung DE durch zusätzliche Zufuhr von Wasserdampf, vorzugsweise Sattdampf, in noch höherem Maße gegenüber **Versuch** I und dementsprechend auch in höherem Maße gegenüber **Versuch II** kompensiert werden, um auf die gleiche Hocherhitzungs-Temperatur THE wie in **Versuch** I bzw. im **Versuch II** (jeweils THE = 137,5 °C) zu gelangen.

Damit das Milchprodukt P durch die zusätzliche Dampfzufuhr im **Versuch III** nicht in noch höherem Maße als in **Versuch II** "verwässert" wird, muss dem Milchprodukt P in der Vakuumkammer 14 durch das sog. Flash-Kühlen FK eine der zusätzlichen Menge Wasserdampf entsprechende Menge Wasser in Form von Brüden entzogen werden. Dieser Vorgang vollzieht sich im Sättigungszustand des Milchprodukts P.

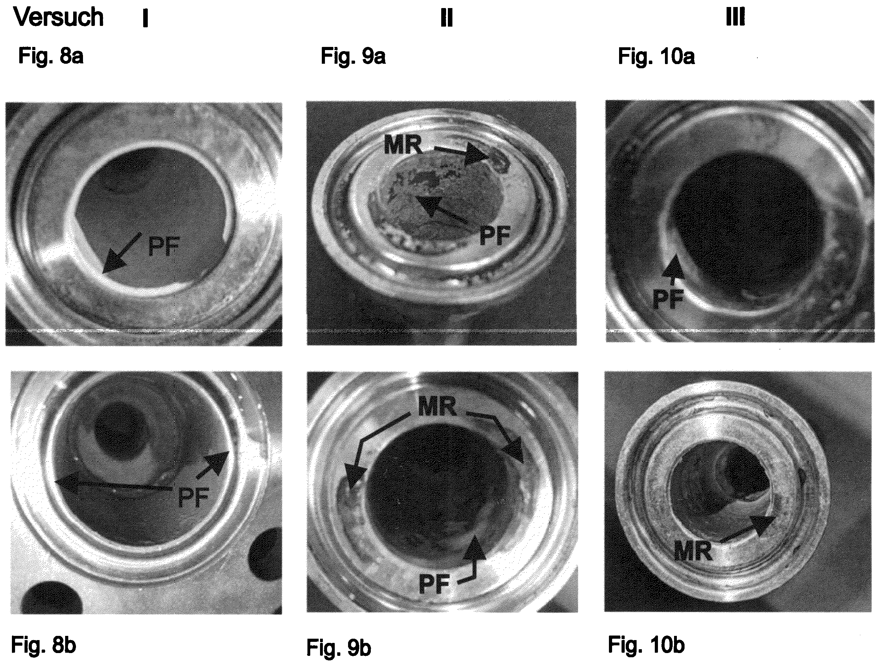

Die **Figuren 8a, 8b, 9a, 9b** und **10a, 10b** zeigen qualitativ den Umfang des Produkt-"Foulings" bzw. der "Fouling"Schicht im in der Regel kritischsten Bereich der Anlage 1000, nämlich stromabwärts des Austritts aus der Direkterhitzungseinrichtung 8, 80 und hier unter Demontagegesichtspunkten im leicht zugänglichen Saugstutzen der zweiten Fördereinrichtung 10 **(****Figur 2****),** für die **Versuche I** bis **III** nach jeweils 5 Stunden Produktionszeit. Die fotografischen Aufnahmen der **Figuren 8a,** 8b sind dem **Versuch I,** jene der **Figuren 8a, 8b** dem **Versuch** II und jene der **Figuren 10a, 10b** dem **Versuch** III zugeordnet.

Die **Figuren 8a, 8b** **(Versuch I,** ohne Kühlung K) zeigen eine geschlossene "Fou-ling"-Schicht PF signifikanter Dicke nach 5 Stunden Produktionszeit, die den Wärmeübergang und die allgemeine Funktionsfähigkeit der Anlagenteile in den infrage kommenden Hocherhitzungsbereichen beeinträchtigt. Eine Unterbrechung der Produktion und eine Reinigung der Anlage 1000 ist nach etwa 10 Stunden Produktionszeit notwendig.

Die **Figuren 9a, 9b** **(Versuch II,** mit Kühlung K; **ΔTK** = 5 K) zeigen eine mit einer Vielzahl inselartiger Unterbrechungen versehene umfängliche Besiedelung der Wandung der in Rede stehenden Bereiche durch eine "Fouling"-Schicht PF sehr mäßiger Dicke, die den Wärmeübergang und die allgemeine Funktionsfähigkeit der Anlagenteile in den infrage kommenden Hocherhitzungsbereichen kaum beeinträchtigt, so dass eine Unterbrechung der Produktion und eine Reinigung der Anlage 1000 erst nach einer Produktionszeit von bis zu 20 Stunden (Produktionszeit etwa 2-3fach länger als in **Versuch I)** notwendig ist.

Die **Figuren 10a, 10b** **(Versuch III,** mit Kühlung K; ΔTK = 10 K) zeigen eine inselartige, flächenmäßig sehr begrenzte Besiedelung der in Rede stehenden Wandungen durch eine "Fouling"-Schicht PF mäßiger Dicke, die den Wärmeübergang und die allgemeine Funktionsfähigkeit der Anlagenteile in den infrage kommenden Hocherhitzungsbereichen kaum beeinträchtigt, so dass eine Unterbrechung der Produktion und eine Reinigung der Anlage 1000 erst nach einer Produktionszeit von bis zu 20 Stunden (Produktionszeit etwa 2-3fach länger als in Versuch I) notwendig ist.

Die in der Schwarz-Weiß-Darstellung der **Figuren 9a** bis **10b** auf der Stirnfläche des Saugstutzens erkennbaren dunkleren Stellen sind geringfügige Ablagerungen des hocherhitzten Milchproduktes P mit braunen oder rötlich-braunen Verfärbungen, die vermutlich durch geringfügige Leckagen an der Flanschverbindung verursacht sind und auf eine Maillard-Reaktion MR des Milchprodukts P hindeuten.

Die vorstehend in Bezug auf die als Infusionseinrichtung 80 ausgebildete Direkterhitzungseinrichtung 8 dargestellten Sachverhalte und Ergebnisse lassen sich sinngemäß auf eine als Injektionseinrichtung 800 ausgebildete Direkterhitzungseinrichtung 8 übertragen **(****Figuren 1****,** **2****).** Ein mit der Lösung der erfindungsgemäßen Aufgabenstellung betrauter Fachmann, ein Verfahrensingenieur oder Technologe der Fachrichtung Milchwissenschaft oder Lebensmittelverfahrenstechnik oder Molkereitechnologie, wird die Lehre der vorliegenden Erfindung, ohne dass er erfinderisch tätig werden muss, auch auf ein in dieser Anmeldung nicht im Einzelnen dargestelltes Injektionsverfahren anwenden und hinsichtlich der dann noch festzulegenden Prozessgrößen optimieren können.

### BEZUGSZEICHENLISTE DER VERWENDETEN ABKÜRZUNGEN

**Figuren 1** **(Stand der Technik)**
- 100: Anlage nach dem Stand der Technik

- 8: Direkterhitzungseinrichtung
- 80: Infusionseinrichtung
- 800: Injektionseinrichtung

- 2: Vorerhitzer
- 2a: Wärmeträgermedium-Eintritt
- 2b: Wärmeträgermedium-Austritt

- 4: erster Heißhalter
- 10: erste Fördereinrichtung
- 12: zweiter Heißhalter
- 14: Vakuumeinrichtung
- 16: zweite Fördereinrichtung
- 18: Milchprodukt-Eintritt (für zu behandelndes Milchprodukt P)
- 20: erster Produktleitungs-Abschnitt
- 22: zweiter Produktleitungs-Abschnitt
- 26: Wasserdampf-Einlass
- 28: Produkt-Einlass
- 30: Auslassrohr
- 32: dritter Produktleitungs-Abschnitt
- 34: vierter Produktleitungs-Abschnitt
- 36: Abführleitung (für behandeltes Milchprodukt P)
- 38: Brüden-Austritt
- 40: erster Kühlmittel-Eintritt
- 42: erster Kühlmittel-Austritt

- D: Wasserdampf
- DE: Direkterhitzung
- FK: Flash-Kühlen
- HE: Hocherhitzung
- HH1: erste Heißhaltung
- HH2: zweite Heißhaltung

- IFV: Infusionsverfahren
- IJV: Injektionsverfahren

- K1: erstes Kühlmittel
- M: Wärmeträgermedium
- P: Milchprodukt (proteinangereichert)

- TA: Austritts-Temperatur (= T6)
- TVE: Vorerhitzungs-Temperatur (= T1, T2)
- THE: Hocherhitzungs-Temperatur (= T4, T5)

- VE: Vorerhitzung
- W: Wasser

- Δt1: erste Verweilzeit
- Δt2: zweite Verweilzeit

**Figuren 2 bis 4**
- 1000: Anlage

- 6: Kühler
- 6a: zweiter Kühlmittel-Eintritt
- 6b: zweiter Kühlmittel-Austritt

- K: Kühlung
- K2: zweites Kühlmittel

- TK: Abkühl-Temperatur (= T3)
- ΔTK: Temperatur-Differenz
- ps: Sättigungs-Druck
- Ts: Sättigungs-Temperatur

**Figuren 6 bis 10b**
- **I**: erster Versuch (ohne Kühlung K)
- II: zweiter Versuch (mit Kühlung K)
- III: dritter Versuch (mit Kühlung K)

**Tabelle 1**

| **Versuch** | **TVE** in °C | Δ**t1** in s | **TK** in °C | **THE** in °C | Δ**t2** in s | **TA** in °C |
|---|---|---|---|---|---|---|
| **I** | 85 | 30 | - | 137,5 | 1 | 83 |
| **II** | 85 | 30 | 80 | 137,5 | 1 | 78,5 |
| **III** | 85 | 30 | 75 | 137,5 | 1 | 73 |

- F: Furosin (Messwert in mg/100 g Protein)
- Fo: Furosin (Messwert, Bezugsgröße für Normierung)
- F/Fo: Furosin (normierte Messwerte in [mg/100 g Protein]/[mg/100 g Protein] = [1])

- L: nicht-denaturiertes β-Laktoglobulin (Messwert in g/kg Protein)
- Lo: wird (Messwert, Bezugsgröße für Normierung)
- L/Lo: nicht-denaturiertes β-Laktoglobulin (normierte Messwerte in [g/kg Protein]/[g/kg Protein] = [1])

- MR: Maillard-Reaktion (Bräunung)
- PF: "Fouling"-Schicht (Produkt-"Fouling"; Belagbildung)

## Patentansprüche

1. Verfahren zur Direkterhitzung (DE) eines proteinangereicherten Milchprodukts (P) mittels der Einbringung von Wasserdampf (D) in dieses Milchprodukt (P),
(a) bei dem bei der Direkterhitzung (DE) der Wasserdampf (D) das Milchprodukt (P) zur Bildung eines keimfreien Zustands durch eine direkte Hocherhitzung (HE) auf eine Hocherhitzungs-Temperatur (THE) erhitzt,
(b) bei dem vor der Direkterhitzung (DE) eine indirekte Vorerhitzung (VE) des Milchprodukts (P) auf eine Vorerhitzungs-Temperatur (TVE) und eine, in Strömungsrichtung des Milchprodukts (P) gesehen, der Vorerhitzung (VE) nachfolgende erste Heißhaltung (HH1) des vorerhitzten Milchprodukts (P) mit einer definierten und kontrollierten ersten Verweilzeit (Δt1) durchgeführt wird,
(c) bei dem, in Strömungsrichtung des Milchprodukts (P) gesehen, nach der Direkterhitzung (DE) auf die Hocherhitzungs-Temperatur (THE) eine zweite Heißhaltung (HH2) des hocherhitzten Milchprodukts (P) mit einer definierten und kontrollierten zweiten Verweilzeit (Δt2) durchgeführt wird und
(d) bei dem dem heißgehaltenen, hocherhitzten Milchprodukt (P) anschließend durch ein Flash-Kühlen (FK) mittels Entspannung auf einen niedrigeren Druck Wasser (W) in einer Menge, die jener des zuvor zugeführten Wasserdampfes (D) entspricht, entzogen wird,
**dadurch gekennzeichnet,**
• **dass** das vorerhitzte und heißgehaltene Milchprodukt (P) vor der Direkterhitzung (DE) eine indirekte Kühlung (K) durch einen rekuperativen Kühlschritt von der Vorerhitzungs-Temperatur (TVE) auf eine Abkühl-Temperatur (TK) mit einer Temperatur-Differenz (ΔTK) in einem Bereich von 5 K(elvin) bis 10 K (ΔTK ≤ (5 bis150) K) erfährt,
• **dass** die Direkterhitzung (DE) von der Abkühl-Temperatur (TK) auf die Hocherhitzungs-Temperatur (THE) mit an sich bekannten Direkterhitzungs-Einstellgrößen gesteuert wird, und
• **dass** nach Maßgabe des Merkmals (d) das Milchprodukt (P) durch das Flash-Kühlen (K) von der Hocherhitzungs-Temperatur (THE) auf eine zwangsläufig notwendige Austritts-Temperatur (TA) abgekühlt wird.

2. Verfahren nach Anspruch 1,
**dadurch gekennzeichnet,**
**dass** die Temperatur-Differenz (ΔTK) 10 K beträgt (ΔTK =10 K).

3. Verfahren nach einem der Ansprüche 1 oder 2,
**dadurch gekennzeichnet,**
**dass** die Direkterhitzungs-Einstellgrößen Druck, Temperatur, Einwirkungsdauer des Wasserdampfes sind.

4. Verfahren nach einem der vorhergehenden Ansprüche,
**dadurch gekennzeichnet,**
**dass** die Direkterhitzung (DE) durch ein an sich bekanntes Infusionsverfahren (IFV) verwirklicht ist.

5. Verfahren nach einem der Ansprüche 1 bis 43,
**dadurch gekennzeichnet,**
**dass** die Direkterhitzung (DE) durch ein an sich bekanntes Injektionsverfahren (IJV) verwirklicht ist.

6. Anlage (1000) zur Direkterhitzung (DE) eines proteinangereicherten Milchprodukts (P) mittels der Einbringung von Wasserdampf (D) in dieses Milchprodukt (P), gemäß einem der Ansprüche 1-5 umfassend in an sich bekannter Weise
• eine Direkterhitzungseinrichtung (8; 80, 800) für das Milchprodukt (P) zu einer direkten Hocherhitzung (HE) mittels Wasserdampfs (D) auf eine Hocherhitzungs-Temperatur (THE),
• einen, in Strömungsrichtung des Milchprodukts (P) gesehen, stromaufwärts der Direkterhitzungseinrichtung (8; 8, 800) angeordneten, als Rekuperator ausgebildeten Vorerhitzer (2) zu einer indirekten Vorerhitzung (VE) des Milchprodukts (P) auf eine Vorerhitzungs-Temperatur (TVE),
• einen ersten Heißhalter (4) zu einer ersten Heißhaltung (HH1) des vorerhitzten Milchprodukts (P), der zwischen der Direkterhitzungseinrichtung (8; 80, 800) und dem Vorerhitzer (2) angeordnet ist,
• eine stromabwärts der Direkterhitzungseinrichtung (8; 80, 800) angeordnete erste Fördereinrichtung (10) zur Förderung des hocherhitzen Milchprodukts (P),
• einen stromabwärts der ersten Fördereinrichtung (10) angeordneten zweiten Heißhalter (12) zu einer zweiten Heißhaltung (HH2) des hocherhitzten Milchprodukts (P),
• eine stromabwärts des zweiten Heißhalters (12) angeordnete Vakuumeinrichtung (14), in der dem heißgehaltenen, hocherhitzten Milchprodukt (P) anschließend durch ein Flash-Kühlen (FK) mittels Entspannung auf einen niedrigeren Druck Wasser (W) in einer Menge, die jener des zuvor zugeführten Wasserdampfes (D) entspricht, entzogen wird,
**dadurch gekennzeichnet,**
**dass** zwischen der Direkterhitzungseinrichtung (8; 80, 800) und dem ersten Heißhalter (4) ein als Rekuperator ausgebildeter Kühler (6) angeordnet ist, der das vorerhitzte und heißgehaltene Milchprodukt (P) durch eine indirekte Kühlung (K) von der Vorerhitzungs-Temperatur (TVE) auf eine Abkühl-Temperatur (TK) abkühlt.

7. Anlage nach Anspruch 6,
**dadurch gekennzeichnet,**
**dass** die Direkterhitzungseinrichtung (8) in Gestalt einer an sich bekannten Infusionseinrichtung (80) ausgebildet ist.

8. Anlage nach Anspruch 6,
**dadurch gekennzeichnet,**
**dass** die Direkterhitzungseinrichtung (8) in Gestalt einer an sich bekannten Injektionseinrichtung (800) ausgebildet ist.

## Claims

1. Method for directly heating (DE) a protein-enriched milk product (P) by introducing steam (D) into said milk product (P),
(a) wherein during the direct heating (DE) the steam (D) heats the milk product (P) to form an aseptic state by a direct high heating (HE) to a high-heating temperature (THE),
(b) wherein prior to the direct heating (DE), an indirect pre-heating (VE) of the milk product (P) to a pre-heating temperature (TVE) and, viewed in the flow direction of the milk product (P), a first heat-holding (HH1) following the pre-heating (VE) of the pre-heated milk product (P) with a defined and controlled first residence time (Δt1) is carried out,
(c) wherein, viewed in the flow direction of the milk product (P), after the direct heating (DE) to the high-heating temperature (THE), a second heat-holding (HH2) of the high-heated milk product (P) with a defined and controlled second residence time (Δt2) is carried out, and
(d) wherein water (W) is subsequently extracted from the heat-held, high-heated milk product (P) by a flash-cooling (FK) by means of expansion to a lower pressure in an amount corresponding to that of the previously supplied steam (D),
**characterized in that**
• the pre-heated and heat-held milk product (P) prior to the direct heating (DE) undergoes an indirect cooling (K) by a recuperative cooling step from the pre-heating temperature (TVE) to a cooling temperature (TK) with a temperature difference (ΔTK) in a range of 5 K(elvin) to 10 K (ΔTK ≤ (5 to 10) K),
• the direct heating (DE) from the cooling temperature (TK) to the high-heating temperature (THE) is controlled with direct-heating adjustment variables known per se, and
• in accordance with the provision of feature (d), the milk product (P) is cooled by the flash-cooling (K) from the high-heating temperature (THE) to an inevitably necessary exit temperature (TA).

2. Method according to claim 1,
**characterized in that**
the temperature difference (ΔTK) is 10 K (ΔTK = 10 K).

3. Method according to one of claims 1 or 2,
**characterized in that**
the direct-heating adjustment variables are pressure, temperature, and exposure time of the steam.

4. Method according to any of the preceding claims,
**characterized in that**
the direct heating (DE) is realized by an infusion method (IFV) known per se.

5. Method according to any of claims 1 to 3,
**characterized in that**
the direct heating (DE) is realized by an injection method (IJV) known per se.

6. Apparatus (1000) for directly heating (DE) a protein-enriched milk product (P) by introducing steam (D) into said milk product (P), according to any of claims 1-5, comprising in a manner known per se
• a direct-heating device (8; 80, 800) for the milk product (P) for a direct high heating (HE) by means of steam (D) to a high-heating temperature (THE),
• a pre-heater (2) arranged upstream of the direct-heating device (8; 80, 800), viewed in the flow direction of the milk product (P), configured as a recuperator for an indirect pre-heating (VE) of the milk product (P) to a pre-heating temperature (TVE),
• a first heat-holding device (4) for a first heat-holding (HH1) of the pre-heated milk product (P), which is arranged between the direct-heating device (8; 80, 800) and the pre-heater (2),
• a first conveying device (10) arranged downstream of the direct-heating device (8; 80, 800) for conveying the high-heated milk product (P),
• a second heat-holding device (12) arranged downstream of the first conveying device (10) for a second heat-holding (HH2) of the high-heated milk product (P),
• a vacuum device (14) arranged downstream of the second heat-holding device (12), in which water (W) is subsequently extracted from the heat-held, high-heated milk product (P) by a flash-cooling (FK) by means of expansion to a lower pressure in an amount corresponding to that of the previously supplied steam (D),
**characterized in that**
• between the direct-heating device (8; 80, 800) and the first heat-holding device (4), a cooler (6) configured as a recuperator is arranged, which cools the pre-heated and heat-held milk product (P) by an indirect cooling (K) from the pre-heating temperature (TVE) to a cooling temperature (TK).

7. Apparatus according to claim 6,
**characterized in that**
the direct-heating device (8) is configured in the form of an infusion device (80) known per se.

8. Apparatus according to claim 6,
**characterized in that**
the direct-heating device (8) is configured in the form of an injection device (800) known per se.

## Revendications

1. Procédé de chauffage direct (DE) d'un produit laitier enrichi en protéines (P) au moyen de l'introduction de vapeur d'eau (D) dans ce produit laitier (P),
(a) dans lequel, lors du chauffage direct (DE), la vapeur d'eau (D) chauffe le produit laitier (P) à une température de chauffage élevée (THE) par un chauffage direct à température élevée (HE) pour former un état stérile,
(b) dans lequel, avant le chauffage direct (DE), un préchauffage indirect (VE) du produit laitier (P) à une température de préchauffage (TVE) et un premier maintien à chaud (HH1) du produit laitier (P) préchauffé, consécutif au préchauffage (VE) vu dans la direction d'écoulement du produit laitier (P), sont réalisés avec un premier temps de séjour (Δt1) défini et contrôlé,
(c) dans lequel, vu dans la direction d'écoulement du produit laitier (P), un deuxième maintien à chaud (HH2) du produit laitier (P) chauffé à température élevée est réalisé après le chauffage direct (DE) à la température de chauffage élevée (THE), avec un deuxième temps de séjour (Δt2) défini et contrôlé, et
(d) dans lequel de l'eau (W) dans une quantité correspondant à celle de la vapeur d'eau (D) alimentée précédemment est ensuite extraite du produit laitier (P) chauffé à température élevée et maintenu à chaud, à l'aide d'un refroidissement instantané (FK) par détente à une pression plus faible,
**caractérisé en ce que**
• avant le chauffage direct (DE), le produit laitier (P) préchauffé et maintenu à chaud est soumis à un refroidissement indirect (K) à l'aide d'une étape de refroidissement récupérative, de la température de préchauffage (TVE) à une température de refroidissement (TK), avec une différence de température (ΔTK) dans une plage comprise entre 5 K(elvin) à 10 K (ΔTK ≤ (5 à 10) K),
• le chauffage direct (DE) de la température de refroidissement (TK) à la température de chauffage élevée (THE) est commandé à l'aide de grandeurs de réglage de chauffage direct connues en soi, et
• conformément à la caractéristique (d), le produit laitier (P) est refroidi de la température de chauffage élevée (THE) à une température de sortie (TA) inévitablement nécessaire à l'aide du refroidissement instantané (K).

2. Procédé selon la revendication 1,
**caractérisé en ce que**
la différence de température (ΔTK) s'élève à 10 K (ΔTK = 10 K).

3. Procédé selon l'une des revendications 1 ou 2,
**caractérisé en ce que**
les grandeurs de réglage du chauffage direct sont la pression, la température, la durée d'action de la vapeur d'eau.

4. Procédé selon l'une des revendications précédentes,
**caractérisé en ce que**
le chauffage direct (DE) est réalisé à l'aide d'un procédé d'infusion (IFV) connu en soi.

5. Procédé selon l'une des revendications 1 à 3,
**caractérisé en ce que**
le chauffage direct (DE) est réalisé à l'aide d'un procédé d'injection (IJV) connu en soi.

6. Installation (1000) destinée au chauffage direct (DE) d'un produit laitier enrichi en protéines (P) au moyen de l'introduction de vapeur d'eau (D) dans ce produit laitier (P), selon l'une des revendications 1 à 5, comportant, de façon connue en soi
• un dispositif de chauffage direct (8 ; 80, 800) pour un chauffage direct à température élevée (HE) du produit laitier (P) à une température de chauffage élevée (THE), au moyen de vapeur d'eau (D),
• un préchauffeur (2) conçu comme un récupérateur, pour un préchauffage indirect (VE) du produit laitier (P) à une température de préchauffage (TVE), disposé en amont du dispositif de chauffage direct (8 ; 80, 800) vu dans la direction d'écoulement du produit laitier (P),
• un premier moyen de maintien à chaud (4) pour un premier maintien à chaud (HH1) du produit laitier (P) préchauffé, lequel est disposé entre le dispositif de chauffage direct (8 ; 80, 800) et le préchauffeur (2),
• un premier dispositif de transport (10) pour le transport du produit laitier (P) chauffé à une température élevée, disposé en aval du dispositif de chauffage direct (8 ; 80, 800),
• un deuxième moyen de maintien à chaud (12) pour un deuxième maintien à chaud (HH2) du produit laitier (P) chauffé à une température élevée, disposé en aval du premier dispositif de transport (10),
• un dispositif à vide (14) disposé en aval du deuxième moyen de maintien à chaud (12), dans lequel de l'eau (W) dans une quantité correspondant à celle de la vapeur d'eau (D) alimentée précédemment est ensuite extraite du produit laitier (P) chauffé à température élevée et maintenu à chaud, à l'aide d'un refroidissement instantané (FK) par détente à une pression plus faible,
**caractérisée en ce que**
un refroidisseur (6) conçu comme un récupérateur est disposé entre le dispositif de chauffage direct (8 ; 80, 800) et le premier moyen de maintien à chaud (4), lequel refroidit le produit laitier (P) préchauffé et maintenu à chaud, à l'aide d'un refroidissement indirect (K) de la température de préchauffage (TVE) à une température de refroidissement (TK).

7. Installation selon la revendication 6,
**caractérisée en ce que**
le dispositif de chauffage direct (8) est conçu sous la forme d'un dispositif d'infusion (80) connu en soi.

8. Installation selon la revendication 6,
**caractérisée en ce que**
le dispositif de chauffage direct (8) est conçu sous la forme d'un dispositif d'injection (800) connu en soi.
